# EUROPEAN PATENT APPLICATION

(11) **EP 4 636 594 A1**
(43) Date of publication of application: **22.10.2025**
(21) Application number: 23917028.5
(22) Date of filing: 11.08.2023
(51) Int. Cl.: G06F 11/14

(54) **REMOTE REPLICATION SYSTEM, METHOD, AND APPARATUS**

(30) Priority: 17.01.2023 CN 202310094941
(71) Applicant: Huawei Technologies Co., Ltd., Shenzhen, Guangdong 518129 (CN)
(72) Inventor: ZHANG, Changjian, Shenzhen, Guangdong 518129 (CN)
(74) Representative: Goddar, Heinz J.
(86) International application number: PCT/CN2023/112684
(87) International publication number: WO 2024/152556

(57) **Abstract**

A remote replication system, method, and apparatus are provided, to resolve a problem that an existing remote replication system severely consumes computing resources and memory resources of a primary server. The remote replication system includes a primary server, a secondary server, and a front-end unit. The front-end unit is configured to: receive a write request, and return a write result after determining that data corresponding to the write request is successfully written into the primary server; record data that is successfully written into the primary server each time; and when a preset synchronization rule is met, determine to-be-synchronized data from the recorded data, and send the to-be-synchronized data to the secondary server. The primary server is configured to store the data written by the front-end unit. The secondary server is configured to store the to-be-synchronized data sent by the front-end unit. In this application, a process of responding to a write request of a user and a process of performing remote replication are mainly completed by the front-end unit, to save computing resources of the primary server.

## Description

### CROSS-REFERENCE TO RELATED APPLICATIONS

This application claims priority to Chinese Patent Application No. 202310094941.5, filed with the China National Intellectual Property Administration on January 17, 2023 and entitled "REMOTE REPLICATION SYSTEM, METHOD, AND APPARATUS", which is incorporated herein by reference in its entirety.

### TECHNICAL FIELD

This application relates to the field of computer technologies, and in particular, to a remote replication system, method, and apparatus.

### BACKGROUND

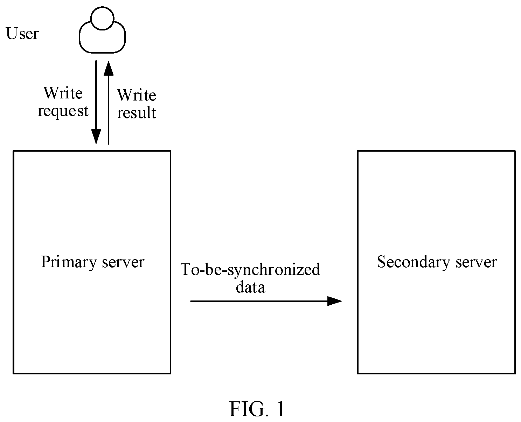

In the field of data security protection, a scenario of data transmission between different nodes exists in both data disaster recovery and data backup. Remote replication is a technology used for data transmission between different nodes. FIG. 1 shows a possible system architecture of remote replication, including a primary server and a secondary server (also referred to as a standby server). The primary server is configured to: provide a service to the outside, for example, receive a write request of a user, store data corresponding to the write request, and return a write result to the user; and is further configured to transmit to-be-synchronized data to the secondary server. The secondary server is configured to store the to-be-synchronized data transmitted by the primary server.

In a process in which the primary server performs remote replication, a large quantity of computing resources and memory resources are consumed.

### SUMMARY

This application provides a remote replication system, method, and apparatus, to resolve a problem that an existing remote replication system severely consumes computing resources and memory resources of a primary server.

According to a first aspect, this application provides a remote replication system, including a primary server, a secondary server, and a front-end unit.

The front-end unit is configured to: receive a write request, and return a write result after determining that data corresponding to the write request is successfully written into the primary server; record data that is successfully written into the primary server each time; and when a preset synchronization rule is met, determine to-be-synchronized data from the recorded data, and send the to-be-synchronized data to the secondary server.

The primary server is configured to store the data written by the front-end unit. The secondary server is configured to store the to-be-synchronized data sent by the front-end unit.

In the foregoing technical solution, when remote replication needs to be performed, the front-end unit may directly determine the to-be-synchronized data from the data recorded in the front-end unit, and send the to-be-synchronized data to the secondary server. The primary server does not need to be accessed in an entire remote replication process, to save memory resources of the primary server. In addition, it can be learned that a process of responding to a write request of a user and a process of performing remote replication are mainly completed by the front-end unit, to save computing resources of the primary server. The primary server only needs to store the data written by the front-end unit, so that consumed computing resources and memory resources are reduced.

In a possible implementation, the front-end unit includes an application and a storage module. The application is configured to: receive the write request, send the data corresponding to the write request to the primary server, return the write result after receiving a write success message sent by the primary server, and send the data corresponding to the write request to the storage module. The storage module is configured to: receive and record the data that is successfully written into the primary server each time; and when the preset synchronization rule is met, determine the to-be-synchronized data from the recorded data, and send the to-be-synchronized data to the secondary server.

The application and the storage module are disposed in the front-end unit. The application is configured to respond to the write request, and is also configured to: send the data corresponding to the write request to the primary server, and further send, to the storage module, the data that is successfully written into the primary server. The storage module is configured to: record the data sent by the application, and when the preset synchronization rule is met, perform remote replication. The application and the storage module work together to respond to the write request and implement remote replication in an orderly manner. In addition, the primary server does not need to be accessed in the entire remote replication process, to save memory resources and computing resources of the primary server.

In a possible implementation, the primary server includes a first processor, a first cache, and a first memory, and the secondary server includes a second processor, a second cache, and a second memory. The first processor is configured to: after receiving the data that corresponds to the write request and that is sent by the application and successfully storing the data corresponding to the write request in the first cache, send a write success message to the application; and when a first preset transfer rule is met, obtain first to-be-transferred data from the data stored in the first cache, and send the first to-be-transferred data to the first memory for storage.

The second processor is configured to: after receiving the to-be-synchronized data sent by the storage module and successfully storing the to-be-synchronized data in the second cache, send a write success message to the storage module; and when a second preset transfer rule is met, obtain second to-be-transferred data from the data stored in the second cache, and send the second to-be-transferred data to the second memory for storage.

The first processor, the first cache, and the first memory are disposed in the primary server, and the second processor, the second cache, and the second memory are disposed in the secondary server. The first processor does not need to directly store the data corresponding to the write request in the first memory, but first stores the data corresponding to the write request in the first cache, and then sends the write success message to the application, so that the write success message can be sent to the application more quickly. When the first preset transfer rule is met, the first to-be-transferred data in the first cache is transferred to the first memory in batches. In this way, the first memory does not need to be accessed for data corresponding to each write request, to save computing resources and memory resources of the primary server. The second processor also does not need to store the to-be-synchronized data in the second memory, but first stores the to-be-synchronized data in the second cache, and then sends the write success message to the storage module, so that the write success message can be sent to the storage module more quickly. When the second preset transfer rule is met, the data in the second cache is transferred to the second memory in batches. In this way, the second memory does not need to be accessed for to-be-synchronized data each time, to save computing resources and memory resources of the secondary server.

In a possible implementation, the storage module is specifically configured to: after sending the to-be-synchronized data to the secondary server, receive a write success message sent by the secondary server; and delete the to-be-synchronized data from the recorded data.

In this way, it is ensured that data to be synchronized to the secondary server each time is new data that has not been synchronized, to save communication resources, and computing resources and memory resources of the secondary server.

According to a second aspect, this application provides a remote replication system, including a primary server, a secondary server, and a front-end unit.

The front-end unit is configured to: receive a write request, and return a write result after determining that data corresponding to the write request is successfully stored; when a third preset transfer rule is met, determine third to-be-transferred data from the data stored in the front-end unit, and send the third to-be-transferred data to the primary server; record third to-be-transferred data that is successfully transferred to the primary server each time; and when a preset synchronization rule is met, determine to-be-synchronized data from the recorded data, and send the to-be-synchronized data to the secondary server.

The primary server is configured to store the third to-be-transferred data written by the front-end unit.

The secondary server is configured to store the to-be-synchronized data sent by the front-end unit.

The foregoing remote replication process is performed in the primary server and the front-end unit. When remote replication needs to be performed, the to-be-synchronized data may be directly determined in the front-end unit, and the to-be-synchronized data in the front-end unit is sent to the secondary server without accessing the primary server, to save memory resources of the primary server. In addition, it can be learned that a process of responding to a write request of a user and a process of performing remote replication are mainly completed by the front-end unit, to save computing resources of the primary server. The primary server only needs to store the third to-be-transferred data written by the front-end unit, so that consumed computing resources and memory resources are reduced. In addition, the front-end unit sends the data stored in the front-end unit to the primary server only after the third preset transfer rule is met, instead of sending data corresponding to each write request once. In this case, the primary server does not need to receive and store the data corresponding to each write request once. Therefore, communication resources are saved, and computing resources and memory resources of the primary server are further saved.

In a possible implementation, the front-end unit includes an application, a third cache, and a storage module. The application is configured to: receive the write request, send the data corresponding to the write request to the third cache, and return the write result after receiving a write success message sent by the third cache. The third cache is configured to: after successfully storing the data sent by the application, return the write success message to the application; when the third preset transfer rule is met, determine the third to-be-transferred data from the data stored in the third cache, and send the third to-be-transferred data to the primary server; and after receiving a write success message sent by the primary server, send the third to-be-transferred data to the storage module. The storage module is configured to: receive and record the data that is successfully transferred by the third cache to the primary server each time; and when the preset synchronization rule is met, determine the to-be-synchronized data from the recorded data, and send the to-be-synchronized data to the secondary server.

In a possible implementation, the primary server includes a first processor, a first cache, and a first memory, and the secondary server includes a second processor, a second cache, and a second memory. The first processor is configured to: after receiving the third to-be-transferred data and successfully storing the third to-be-transferred data in the first cache, send a write success message to the third cache; and when a first preset transfer rule is met, obtain first to-be-transferred data from the third to-be-transferred data stored in the first cache, and send the first to-be-transferred data to the first memory for storage. The second processor is configured to: after receiving the to-be-synchronized data sent by the storage module and successfully storing the to-be-synchronized data in the second cache, send a write success message to the storage module; and when a second preset transfer rule is met, obtain second to-be-transferred data from the to-be-synchronized data stored in the second cache, and send the second to-be-transferred data to the second memory for storage.

In a possible implementation, the storage module is specifically configured to: after sending the to-be-synchronized data to the secondary server, receive a write success message sent by the secondary server; and delete the to-be-synchronized data from the recorded data.

In this way, it is ensured that data to be synchronized to the secondary server each time is new data that has not been synchronized, to save communication resources, and computing resources and memory resources of the secondary server.

In a possible implementation, the cache is specifically configured to: after determining that a preset transfer rule is met, transfer stored data that has not been transferred.

In this way, it is ensured that data to be transferred each time is data that has not been transferred, to save communication resources, computing resources, and memory resources.

According to a third aspect, this application provides a remote replication method. The method is applied to a remote replication system including a front-end unit, a primary server, and a secondary server, and includes: The front-end unit receives a write request, and returns a write result after determining that data corresponding to the write request is successfully written into the primary server. The front-end unit records data that is successfully written into the primary server each time; and when a preset synchronization rule is met, determines to-be-synchronized data from the recorded data, and sends the to-be-synchronized data to the secondary server.

In a possible implementation, after sending the to-be-synchronized data to the secondary server, the method further includes: The front-end unit receives a write success message sent by the secondary server; and the front-end unit deletes the to-be-synchronized data from recorded data.

According to a fourth aspect, this application provides a remote replication method. The method is applied to a remote replication system including a front-end unit, a primary server, and a secondary server, and includes: The primary server receives data written by the front-end unit; and the primary server stores the received data.

In a possible implementation, the primary server includes a first processor, a first cache, and a first memory. That the primary server stores the received data includes: After storing the received data in the first cache, the first processor sends a write success message to the front-end unit; and when a first preset transfer rule is met, the first processor obtains first to-be-transferred data from the data stored in the first cache, and sends the first to-be-transferred data to the first memory for storage.

According to a fifth aspect, this application provides a remote replication method. The method is applied to a remote replication system including a front-end unit, a primary server, and a secondary server, and includes: The front-end unit receives a write request, and returns a write result after determining that data corresponding to the write request is successfully stored. When a third preset transfer rule is met, the front-end unit determines third to-be-transferred data from the data stored in the front-end unit, and sends the third to-be-transferred data to the primary server; and records third to-be-transferred data that is successfully transferred to the primary server each time. When a preset synchronization rule is met, the front-end unit determines to-be-synchronized data from the recorded data, and sends the to-be-synchronized data to the secondary server.

In a possible implementation, after the front-end unit sends the to-be-synchronized data to the secondary server, the method further includes: The front-end unit receives a write success message sent by the secondary server; and the front-end unit deletes the to-be-synchronized data from recorded data.

According to a sixth aspect, this application provides a remote replication method. The method is applied to a remote replication system including a front-end unit, a primary server, and a secondary server, and includes: The primary server receives third to-be-transferred data written by the front-end unit; and the primary server stores the received third to-be-transferred data.

In a possible implementation, the primary server includes a first processor, a first cache, and a first memory. That the primary server stores the received third to-be-transferred data includes: After successfully storing the third to-be-transferred data in the first cache, the first processor sends a write success message to the front-end unit; and when a first preset transfer rule is met, obtains first to-be-transferred data from the third to-be-transferred data stored in the first cache, and sends the first to-be-transferred data to the first memory for storage.

According to a seventh aspect, this application provides a remote replication apparatus, where the apparatus is used in a front-end unit and includes: a processing unit, configured to: receive a write request, and return a write result after determining that data corresponding to the write request is successfully written into a primary server; and record data that is successfully written into the primary server each time; and a synchronization unit, configured to: when a preset synchronization rule is met, determine to-be-synchronized data from the recorded data, and send the to-be-synchronized data to a secondary server.

According to an eighth aspect, this application provides a remote replication apparatus, where the apparatus is used in a primary server and includes: a receiving unit, configured to receive data written by a processing unit of a front-end unit; and a storage unit, configured to store the received data.

According to a ninth aspect, this application provides a remote replication apparatus, where the apparatus is used in a front-end unit and includes: a processing unit, configured to: receive a write request, and return a write result after determining that data corresponding to the write request is successfully stored; when a third preset transfer rule is met, determine third to-be-transferred data from the data stored in the processing unit, and send the third to-be-transferred data to a primary server; and record third to-be-transferred data that is successfully transferred to the primary server each time; and a synchronization unit, configured to: when a preset synchronization rule is met, determine to-be-synchronized data from the recorded data, and send the to-be-synchronized data to the secondary server.

According to a tenth aspect, this application provides a remote replication apparatus, where the apparatus is used in a primary server and includes: a receiving unit, configured to receive third to-be-transferred data written by a processing unit of a front-end unit; and a storage unit, configured to store the received third to-be-transferred data.

According to an eleventh aspect, an embodiment of this application provides a computing device, including: a memory, configured to store a computer program; and a processor, configured to: invoke the computer program stored in the memory, and perform the data transfer method according to any one of the third aspect to the sixth aspect based on the obtained program.

According to a twelfth aspect, an embodiment of this application provides a computer-readable storage medium. The computer-readable storage medium stores a computer program or instructions. When the computer program or the instructions are executed, a computer is enabled to perform the data transfer method in any one of the third aspect to the sixth aspect.

According to a thirteenth aspect, an embodiment of this application provides a computer program product. When a computer reads and executes the computer program product, the computer is enabled to perform the data transfer method in any one of the third aspect to the sixth aspect.

### BRIEF DESCRIPTION OF DRAWINGS

FIG. 1 is a diagram of a system architecture of remote replication in a conventional technology;
FIG. 2a is a diagram of a system architecture of remote replication according to this application;
FIG. 2b is a diagram of a system architecture of remote replication according to this application;
FIG. 3a is a diagram of a system architecture of remote replication according to this application;
FIG. 3b is a diagram of a system architecture of remote replication according to this application;
FIG. 3c is a diagram of a system architecture of remote replication according to this application;
FIG. 3d is a diagram of a system architecture of remote replication according to this application;
FIG. 4a is a diagram of a system architecture of remote replication according to this application;
FIG. 4b is a diagram of a system architecture of remote replication according to this application;
FIG. 4c is a diagram of a system architecture of remote replication according to this application;
FIG. 4d is a diagram of a system architecture of remote replication according to this application;
FIG. 5 is a diagram of a remote replication apparatus according to this application;
FIG. 6 is a diagram of a remote replication apparatus according to this application; and
FIG. 7 is a diagram of a computer device according to this application.

### DESCRIPTION OF EMBODIMENTS

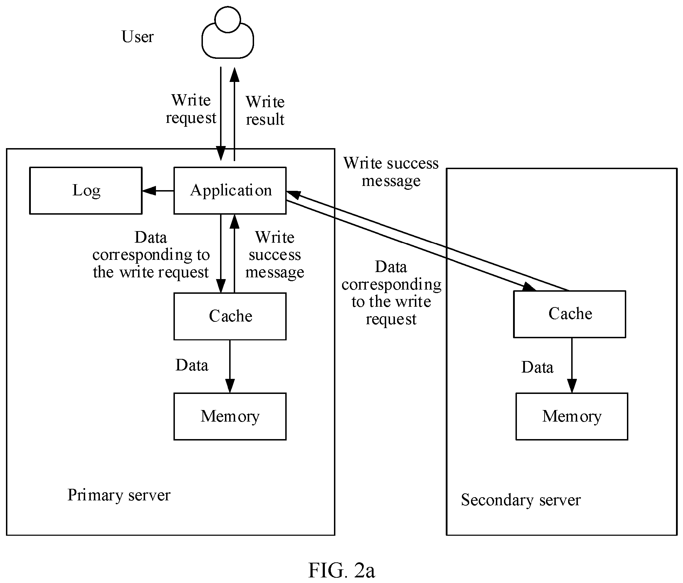

Remote replication includes synchronous remote replication and asynchronous remote replication. FIG. 2a is an example of a diagram of a system architecture of synchronous remote replication. The system architecture includes a primary server and a secondary server. An application, a cache, a log, and a memory are deployed on the primary server, and a cache and a memory are deployed on the secondary server. In synchronous remote replication, the primary server returns a write result to a user only after data corresponding to any write request of the user is written into both the primary server and the secondary server.

Specifically, for any data write request of the user, the application of the primary server receives the write request, and sends data corresponding to a current write request to the cache of the primary server and the cache of the secondary server. After the cache of the primary server returns a write success message to the application and the cache of the secondary server returns a write result to the application, the application returns the write result to the user. After a preset transfer rule is met, data in the cache of the primary server is transferred to the memory of the primary server, to implement permanent storage. The preset transfer rule may be preset duration or that data in the cache of the primary server meets a preset amount. After the preset transfer rule is met, data in the cache of the secondary server is transferred to the memory of the secondary server, to implement permanent storage. At this time, the primary server and the secondary server complete one time of remote replication.

In the figure above, each time after the application sends data to the cache of the primary server, the operation is recorded in the log. In this way, when the primary server is faulty or powered off, if the data in the cache is lost because the data is not stored in the memory in time, the data can be replayed by using a previously recorded log, so that the data in the cache is restored.

In the foregoing remote replication process, the primary server returns the write result to the user only after the data corresponding to any write request of the user is written into both the primary server and the secondary server. This increases a delay of returning the write result to the user, reduces efficiency of providing a service to the outside by the primary server, and affects user experience.

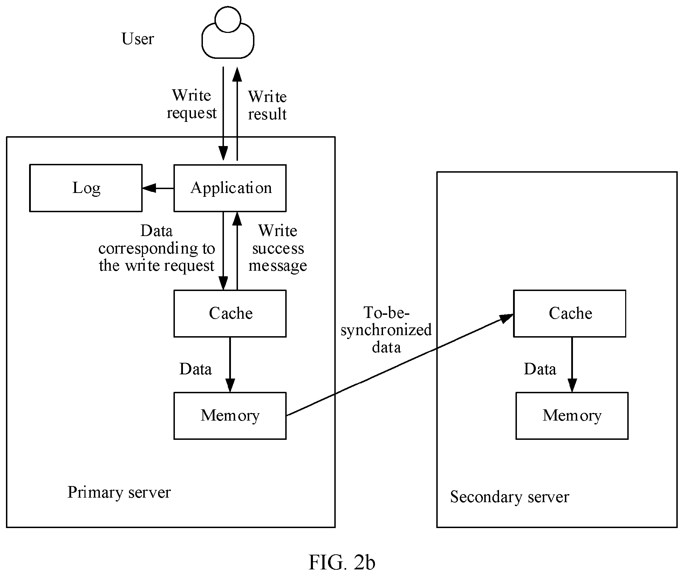

FIG. 2b is an example of a diagram of a system architecture of asynchronous remote replication. The system architecture includes a primary server and a secondary server. An application, a cache, a log, and a memory are deployed on the primary server, and a cache and a memory are deployed on the secondary server. In asynchronous remote replication, the primary server may return a write result to a user after data corresponding to any write request of the user is written into the primary server, and then the primary server may synchronize data in the primary server to the secondary server according to a preset synchronization rule. The preset synchronization rule may be that synchronization is performed at an interval of preset duration, or may be that to-be-synchronized data reaches a preset amount, or the like.

Specifically, for any data write request of the user, the application of the primary server receives the write request, and sends data corresponding to a current write request to the cache of the primary server. After the cache of the primary server returns a write success message to the application, the application returns a write result to the user. When determining that a preset transfer rule is met, the cache of the primary server transfers data in the cache to the memory of the primary server, to implement permanent storage. The primary server determines current to-be-synchronized data according to the preset synchronization rule, accesses the memory of the primary server, obtains the current to-be-synchronized data from the memory of the primary server, and sends the current to-be-synchronized data to the cache of the secondary server. When the cache of the secondary server determines that a preset transfer rule is met, data in the cache of the secondary server is transferred to the memory of the secondary server, to implement permanent storage. At this time, the primary server and the secondary server complete one time of remote replication.

In FIG. 2b, each time after the application sends data to the cache of the primary server, the operation is recorded in the log. In this way, when the primary server is faulty or powered off, if the data in the cache is lost because the data is not stored in the memory in time, the data can be replayed by using a previously recorded log, so that the data in the cache is restored. In addition, the log further has another function. The log can record incremental data in each time of synchronous replication. For example, the log records that data a and data b are synchronously replicated to the secondary server this time. After this time of synchronous replication, the log records that data c and data dare newly added. In this case, in a next time of synchronous replication, it is determined that incremental data is the data c and the data d based on a record in the log. In this case, only the data c and the data d (the data c and the data d are to-be-synchronized data) need to be obtained from the memory and sent to the secondary server, and the data a and the data b do not need to be obtained.

In the foregoing asynchronous remote replication process, because the write result may be returned to the user after the data corresponding to any write request of the user is written into the cache of the primary server, the write request of the user is responded to in a very timely manner, thereby improving user experience. However, a large quantity of computing resources and memory resources of the primary server are occupied. Specifically, the primary server needs to write the data corresponding to the write request into the cache of the primary server, respond to the write request of the user, transfer the data from the cache to the memory, access the memory, and synchronize the data in the memory to the cache of the secondary server. Therefore, a large quantity of computing resources of the primary server are consumed. In addition, because the memory of the primary server needs to be accessed in each time of remote replication, and the to-be-synchronized data is transmitted from the memory of the primary server to the secondary server, a large quantity of memory resources of the primary server are also consumed.

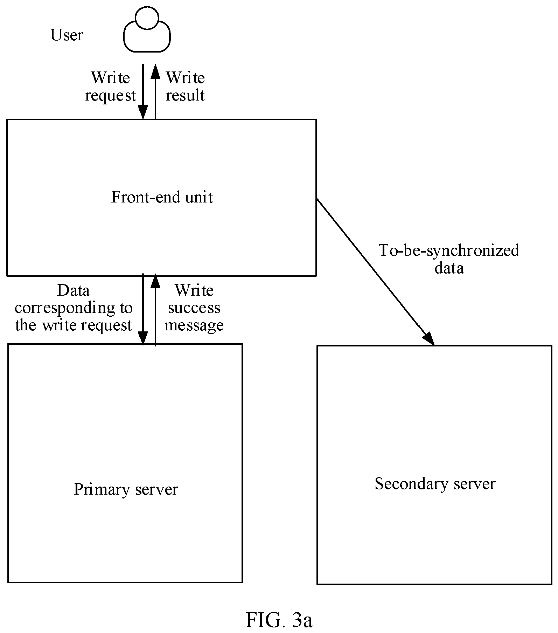

In conclusion, in embodiments of this application, the system architecture of asynchronous remote replication is improved, to provide another remote replication system. FIG. 3a shows a remote replication system according to an embodiment of this application. The system includes a primary server, a secondary server, and a front-end unit.

The front-end unit is configured to: receive a write request, and return a write result after determining that data corresponding to the write request is successfully written into the primary server; record data that is successfully written into the primary server each time; and when a preset synchronization rule is met, determine to-be-synchronized data from the recorded data, and send the to-be-synchronized data to the secondary server. The preset synchronization rule may be that synchronization is performed at an interval of preset duration, or may be that the to-be-synchronized data reaches a preset amount, or the like.

The primary server is configured to store the data written by the front-end unit. The secondary server is configured to store the to-be-synchronized data sent by the front-end unit.

In the foregoing technical solution, the front-end unit is added to an existing remote replication system, and the front-end unit assists the primary server in completing a remote replication process. Specifically, the front-end unit is configured to: return the write result to a user after determining that the data corresponding to the write request is successfully written into the primary server, and record the data that is successfully written into the primary server each time. In this way, when remote replication needs to be performed, the front-end unit may directly determine the to-be-synchronized data from the data recorded in the front-end unit, and send the to-be-synchronized data to the secondary server. It can be learned that, because the front-end unit completes some work in an entire remote replication process, a problem that most remote replication procedures need to be completed by the primary server is avoided. Therefore, memory resources and computing resources of the primary server are saved.

For example, the user needs to write data a, and the user sends a write request of the data a to the front-end unit. The front-end unit receives the write request of the data a that is sent by the user, and writes the data a into the primary server. After determining that the writing succeeds, the front-end unit returns a write result to the user: The writing succeeds. In addition, because the data a is successfully written into the primary server, the front-end unit records the data a. If the data a is not successfully written into the primary server, the front-end unit does not record the data a. For example, the front-end unit further receives a write request of data b, and performs the same operation on the data b. It is assumed that the preset synchronization rule is performing synchronization at an interval of 10s. It is assumed that after 10s, the front-end unit successfully writes 100 pieces of data into the primary server. In this case, the front-end unit also stores the 100 pieces of data that are successfully written into the primary server within the 10s. The to-be-synchronized data determined by the front-end unit may be the 100 pieces of data. When the preset synchronization rule is met, the determined to-be-synchronized data may be sent to the secondary server for synchronization.

In a possible implementation, to-be-synchronized data determined by the front-end unit each time may be all data recorded by the front-end unit up to a current moment. After the to-be-synchronized data is sent to the secondary server, the secondary server selects, from the to-be-synchronized data, data that has not been synchronized before for storage. In the foregoing manner, the front-end unit does not need to determine whether the to-be-synchronized data sent each time is successfully written into the secondary server, and execution logic of the front-end unit is simple, to save computing resources of the front-end unit. However, more communication resources are consumed because the to-be-synchronized data sent each time is all data that is successfully written into the primary server and that is recorded in the front-end unit. In addition, more computing resources of the secondary server are consumed because each time after the secondary server receives the to-be-synchronized data, the secondary server needs to select, from the to-be-synchronized data, the data that has not been stored before for storage.

To resolve the foregoing problem of consuming computing resources of the secondary server, in another possible implementation, after successfully storing the to-be-synchronized data, the secondary server sends a write success message to the front-end unit. In this case, after determining that the to-be-synchronized data is successfully written into the secondary server, the front-end unit deletes the to-be-synchronized data from the recorded data. For example, in the foregoing example, the front-end unit sends 100 pieces of to-be-synchronized data to the secondary server, and the secondary server stores the 100 pieces of to-be-synchronized data after receiving the 100 pieces of to-be-synchronized data, and sends a write success message to the front-end unit after successfully storing the 100 pieces of to-be-synchronized data. The front-end unit then deletes the 100 pieces of to-be-synchronized data from the recorded data. In this case, when sending to-be-synchronized data to the secondary server next time, the front-end unit does not send the 100 pieces of to-be-synchronized data. In this way, it is ensured that data to be synchronized to the secondary server each time is new data that has not been synchronized, to save communication resources. In addition, after receiving the to-be-synchronized data, the secondary server does not need to select, from the to-be-synchronized data, data that has not been synchronized before for storage, to save computing resources of the secondary server.

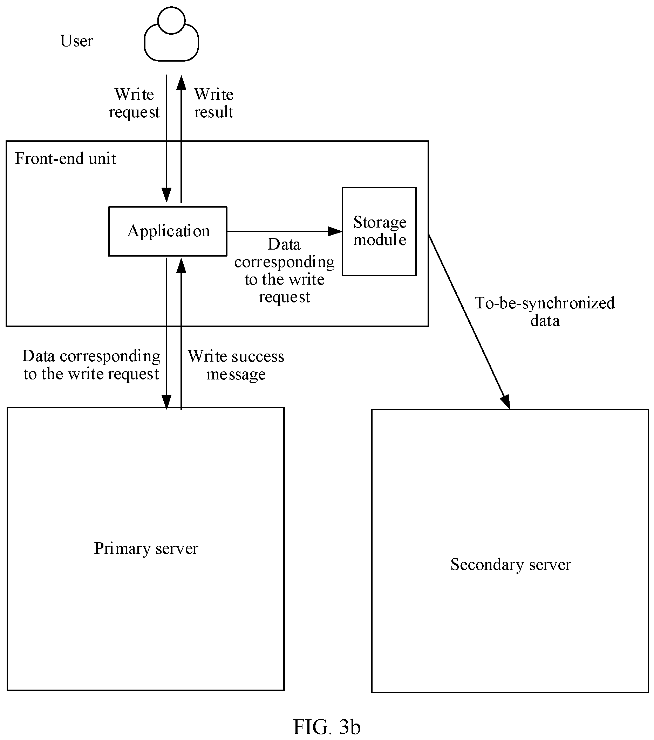

In some embodiments, the front-end unit may include an application and a storage module, as shown in FIG. 3b.

The application is configured to: receive the write request, send the data corresponding to the write request to the primary server, return the write result after receiving a write success message sent by the primary server, and send the data corresponding to the write request to the storage module. The storage module is configured to: receive and record the data that is successfully written into the primary server each time; and when the preset synchronization rule is met, determine the to-be-synchronized data from the recorded data, and send the to-be-synchronized data to the secondary server.

For example, the user needs to write data a, and the user sends a write request of the data a to the application of the front-end unit. The application of the front-end unit receives the write request of the data a that is sent by the user, and writes the data a into the primary server. After a write success message sent by the primary server is received, it indicates that the data a has been successfully written into the primary server. Therefore, the application of the front-end unit returns a write result to the user: The writing succeeds. In addition, because the data a is successfully written into the primary server, the application of the front-end unit sends the data a to the storage module, and the storage module records the data a. If the data a is not successfully written into the primary server, the application of the front-end unit does not receive the write success message sent by the primary server. In this case, the application of the front-end unit does not send the data a to the storage module, and the storage module does not record the data a. For example, the application of the front-end unit further receives a write request of data b, and performs the same operation on the data b. It is assumed that the preset synchronization rule is performing synchronization at an interval of 10s. It is assumed that after 10s, the application of the front-end unit successfully writes 100 pieces of data into the primary server. In this case, the storage module also stores the 100 pieces of data that are successfully written into the primary server within the 10s. The to-be-synchronized data determined by the storage module is the 100 pieces of data, and the 100 pieces of to-be-synchronized data are sent to the secondary server for synchronization.

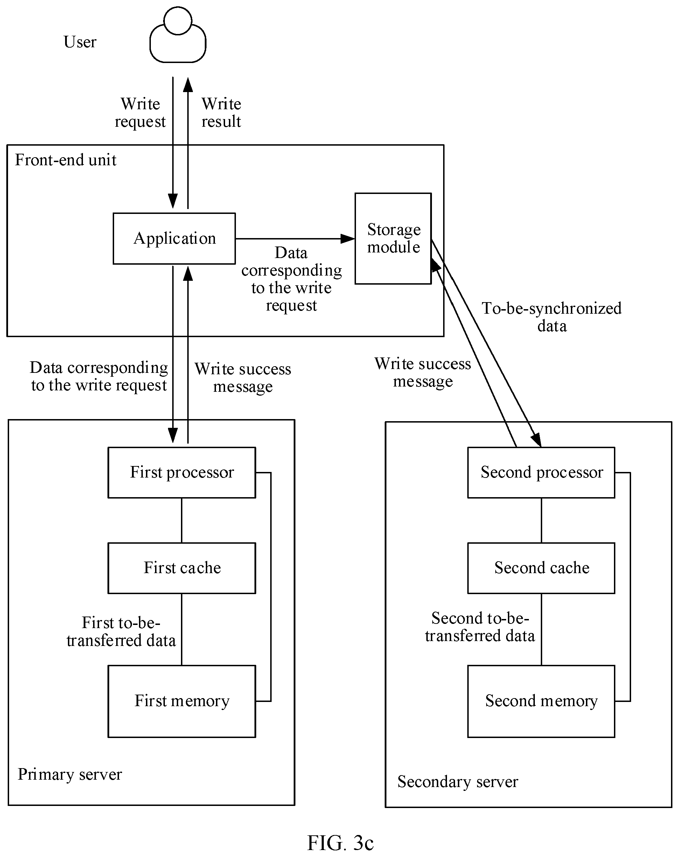

In some embodiments, the primary server may include a first processor, a first cache, and a first memory, and the secondary server includes a second processor, a second cache, and a second memory, as shown in FIG. 3c.

The first processor is configured to: after receiving the data that corresponds to the write request and that is sent by the application and successfully storing the data corresponding to the write request in the first cache, send a write success message to the application; and when a first preset transfer rule is met, obtain first to-be-transferred data from the data stored in the first cache, and send the first to-be-transferred data to the first memory for storage, to implement permanent storage.

The second processor is configured to: after receiving the to-be-synchronized data sent by the storage module and successfully storing the to-be-synchronized data in the second cache, send a write success message to the storage module; and when a second preset transfer rule is met, obtain second to-be-transferred data from the data stored in the second cache, and send the second to-be-transferred data to the second memory for storage, to implement permanent storage.

The first preset transfer rule herein may be that preset duration is met or that the data in the first cache meets a preset amount. The second preset transfer rule may be that preset duration is met or that the data in the second cache meets a preset amount.

For example, the application of the front-end unit sends data a to the first processor, and after successfully storing the data a in the first cache, the first processor sends a write success message to the application. It is assumed that the first transfer rule is an interval of 20s. Every 20s, the first processor obtains, from the first cache, first to-be-transferred data that has not been transferred to the first memory before, and sends the first to-be-transferred data to the first memory for permanent storage.

For another example, when the preset synchronization rule is met, the storage module of the front-end unit sends the to-be-synchronized data (for example, data a, data b, data c, data d, and data e) to the second processor. After successfully storing the to-be-synchronized data in the second cache, the second processor sends a write success message to the storage module. It is assumed that the second transfer rule is an interval of 20s. Every 20s, the second processor obtains, from the second cache, second to-be-transferred data that has not been transferred to the second memory before, and sends the second to-be-transferred data to the second memory for permanent storage.

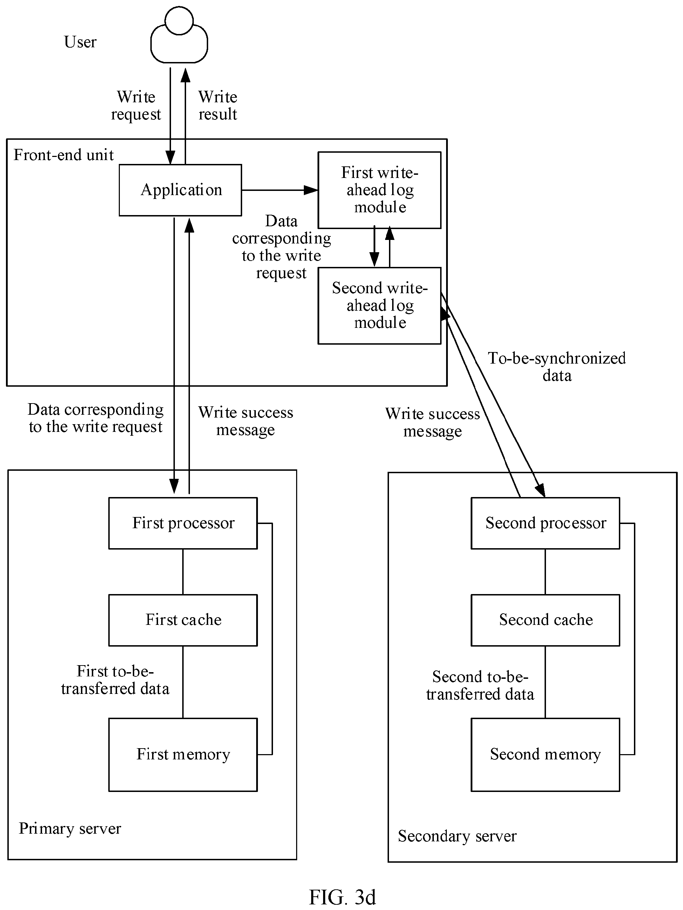

In some embodiments, the storage module may be two write-ahead log (WAL) modules: a first write-ahead log module and a second write-ahead log module, as shown in FIG. 3d. The first write-ahead log module is configured to record the data that is successfully written into the primary server, and the second write-ahead log module is configured to perform a remote replication operation.

Specifically, after receiving a write success message of the primary server for a piece of data, the application sends the data to the first write-ahead log module, so that the first write-ahead log module records the data. When the preset synchronization rule is met, the to-be-synchronized data is stored in the second write-ahead log module, so that the second write-ahead log module sends the to-be-synchronized data to the secondary server. After the second write-ahead log module receives the write success message sent by the secondary server, it indicates that one time of remote replication is completed. In this case, the second write-ahead log module clears the data stored in the second write-ahead log module, and the cleared second write-ahead log module is updated to a first write-ahead log module, to record data that is successfully written into the primary server. The original first write-ahead log module is updated to a second write-ahead log module, so that data in the second write-ahead log module is sent to the secondary server as to-be-synchronized data.

In the foregoing technical solutions, two write-ahead log modules are disposed, and the two write-ahead log modules are configured to complete different work. After one time of remote replication is completed, roles of the two write-ahead log modules are exchanged. It can be ensured that a process in which the first write-ahead log module records the data that is successfully written into the primary server and the remote replication process are performed simultaneously without affecting each other. This ensures replication efficiency and orderly running of the remote replication system.

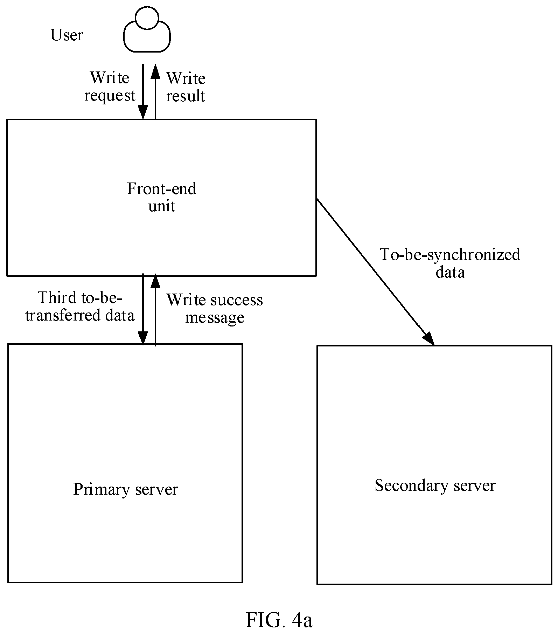

An embodiment of this application further provides another remote replication system. The system includes a primary server, a secondary server, and a front-end unit, as shown in FIG. 4a.

The front-end unit is configured to: receive a write request, and return a write result after determining that data corresponding to the write request is successfully stored; when a third preset transfer rule is met, determine third to-be-transferred data from the data stored in the front-end unit, and send the third to-be-transferred data to the primary server; record third to-be-transferred data that is successfully transferred to the primary server each time; and when a preset synchronization rule is met, determine to-be-synchronized data from the recorded data, and send the to-be-synchronized data to the secondary server. The third preset transfer rule may be preset duration or that the data stored in the front-end unit meets a preset amount. The preset synchronization rule may be that synchronization is performed at an interval of preset duration, or may be that the to-be-synchronized data reaches a preset amount, or the like.

The primary server is configured to store the third to-be-transferred data written by the front-end unit. The secondary server is configured to store the to-be-synchronized data sent by the front-end unit.

In the foregoing remote replication system, the front-end unit does not need to send data corresponding to each write request to the primary server, but directly stores the data in the front-end unit and then may return the write result to a user, so that a speed of returning the write result to the user is improved. Then, when the third preset transfer rule is met, the front-end unit determines the third to-be-transferred data from the data stored in the front-end unit, and sends the third to-be-transferred data to the primary server. In addition, the front-end unit records the third to-be-transferred data that is successfully transferred to the primary server each time. In this way, when remote replication needs to be performed, the to-be-synchronized data may be directly determined in the front-end unit, and the to-be-synchronized data in the front-end unit is sent to the secondary server without accessing the primary server, to save memory resources of the primary server. In addition, it can be learned that a process of responding to the write request of the user and a process of performing remote replication are mainly completed by the front-end unit, to save computing resources of the primary server. The primary server only needs to store the third to-be-transferred data written by the front-end unit, so that consumed computing resources and memory resources are greatly reduced. In addition, the front-end unit sends the data stored in the front-end unit to the primary server only after the third preset transfer rule is met, instead of sending the data corresponding to each write request once. In this case, the primary server does not need to receive and store the data corresponding to each write request once. Therefore, communication resources are saved, and computing resources and memory resources of the primary server are further saved.

For example, the user needs to write data a, and the user sends a write request of the data a to the front-end unit. The front-end unit receives the write request of the data a that is sent by the user, writes the data a into storage space of the front-end unit, and returns a write result to the user: The writing succeeds. For example, the front-end unit further receives a write request of data b, and performs the same operation on the data b. After a period of time, the front-end unit stores the data a, the data b, and data c. If the third preset transfer rule is met, the front-end unit determines, from the stored data, third to-be-transferred data that has not been transferred to the primary server. For example, the third to-be-transferred data may be the data a, the data b, and the data c. The front-end unit sends the data a, the data b, and the data c to the primary server. The primary server stores the third to-be-transferred data. After the storage succeeds, the primary server sends a write success message to the front-end unit.

After receiving the write success message from the primary server, the front-end unit records the data a, the data b, and the data c. It is assumed that the front-end unit then successfully writes data d, data e, and data f into the primary server. In this case, the front-end unit records the data d, the data e, and the data f. When determining that the preset synchronization rule is met, the front-end unit determines the to-be-synchronized data from the recorded data. For example, the to-be-synchronized data may be the data a, the data b, the data c, the data d, the data e, and the data f. In this case, the front-end unit sends the data a, the data b, the data c, the data d, the data e, and the data f to the secondary server. The secondary server stores the data a, the data b, the data c, the data d, the data e, and the data f. At this time, one time of remote replication is completed.

In a possible implementation, to-be-synchronized data determined by the front-end unit each time may be all data recorded by the front-end unit up to a current moment. After the to-be-synchronized data is sent to the secondary server, the secondary server selects, from the to-be-synchronized data, data that has not been synchronized before for storage. In the foregoing manner, the front-end unit does not need to determine whether the to-be-synchronized data sent each time is successfully written into the secondary server, and execution logic of the front-end unit is simple, to save computing resources of the front-end unit. However, more communication resources are consumed because the to-be-synchronized data sent each time is all data that is successfully written into the primary server and that is recorded in the front-end unit. In addition, more computing resources of the secondary server are consumed because each time the secondary server receives the to-be-synchronized data, the secondary server needs to select, from the to-be-synchronized data, the data that has not been stored before for storage.

To resolve the foregoing problem of consuming computing resources of the secondary server, in another possible implementation, after successfully storing the to-be-synchronized data, the secondary server sends a write success message to the front-end unit. In this case, after determining that the to-be-synchronized data is successfully written into the secondary server, the front-end unit deletes the to-be-synchronized data from the recorded data. For example, in the foregoing example, the front-end unit sends 100 pieces of to-be-synchronized data to the secondary server, and the secondary server stores the 100 pieces of to-be-synchronized data after receiving the 100 pieces of to-be-synchronized data, and sends a write success message to the front-end unit after successfully storing the 100 pieces of to-be-synchronized data. The front-end unit then deletes the 100 pieces of to-be-synchronized data from the recorded data. In this case, when sending to-be-synchronized data to the secondary server next time, the front-end unit does not send the 100 pieces of to-be-synchronized data. In this way, it is ensured that data to be synchronized to the secondary server each time is new data that has not been synchronized, to save communication resources. In addition, after receiving the to-be-synchronized data, the secondary server does not need to select, from the to-be-synchronized data, data that has not been synchronized before for storage, to save computing resources of the secondary server.

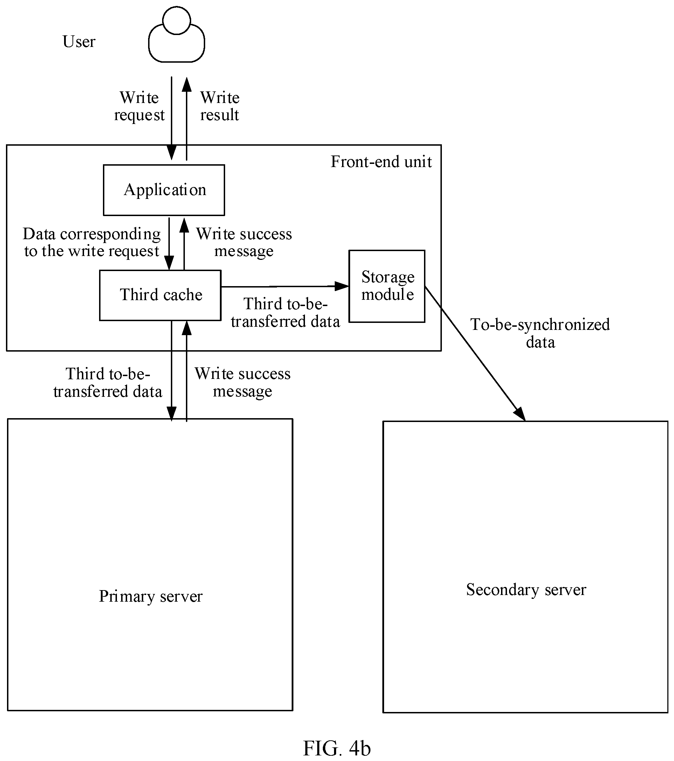

In some embodiments, the front-end unit may include an application, a third cache, and a storage module, as shown in FIG. 4b.

The application is configured to: receive the write request, send the data corresponding to the write request to the third cache, and return the write result after receiving a write success message sent by the third cache. The third cache is configured to: after successfully storing the data sent by the application, return the write success message to the application; when the third preset transfer rule is met, determine the third to-be-transferred data from the data stored in the third cache, and send the third to-be-transferred data to the primary server; and after receiving a write success message sent by the primary server, send the third to-be-transferred data to the storage module. The storage module is configured to: receive and record the data that is successfully transferred by the third cache to the primary server each time; and when the preset synchronization rule is met, determine the to-be-synchronized data from the recorded data, and send the to-be-synchronized data to the secondary server.

For example, the user needs to write data a, and the user sends a write request of the data a to the application of the front-end unit. The application of the front-end unit receives the write request of the data a that is sent by the user, and writes the data a into the third cache. After a write success message sent by the third cache is received, it indicates that the data a has been successfully written into the third cache. Therefore, the application of the front-end unit returns a write result to the user: The writing succeeds. For example, the application of the front-end unit further receives a write request of data b, and performs the same operation on the data b. After a period of time, the third cache stores the data a, the data b, and data c. When the third transfer rule is met, the third cache determines third to-be-transferred data that has not been transferred to the primary server before. For example, the third to-be-transferred data is the data a, the data b, and the data c. The third cache sends the data a, the data b, and the data c to the primary server. The primary server stores the third to-be-transferred data. After the storage succeeds, the primary server sends a write success message to the third cache.

After receiving the write success message from the primary server, the third cache sends the data a, the data b, and the data c to the storage module for recording. Then, the third cache successfully writes data d, data e, and data f into the primary server. In this case, the storage module records the data d, the data e, and the data f. When determining that the preset synchronization rule is met, the storage module determines the to-be-synchronized data from the recorded data. For example, the to-be-synchronized data is the data a, the data b, the data c, the data d, the data e, and the data f. In this case, the storage module sends the data a, the data b, the data c, the data d, the data e, and the data f to the secondary server. The secondary server stores the data a, the data b, the data c, the data d, the data e, and the data f. At this time, one time of remote replication is completed.

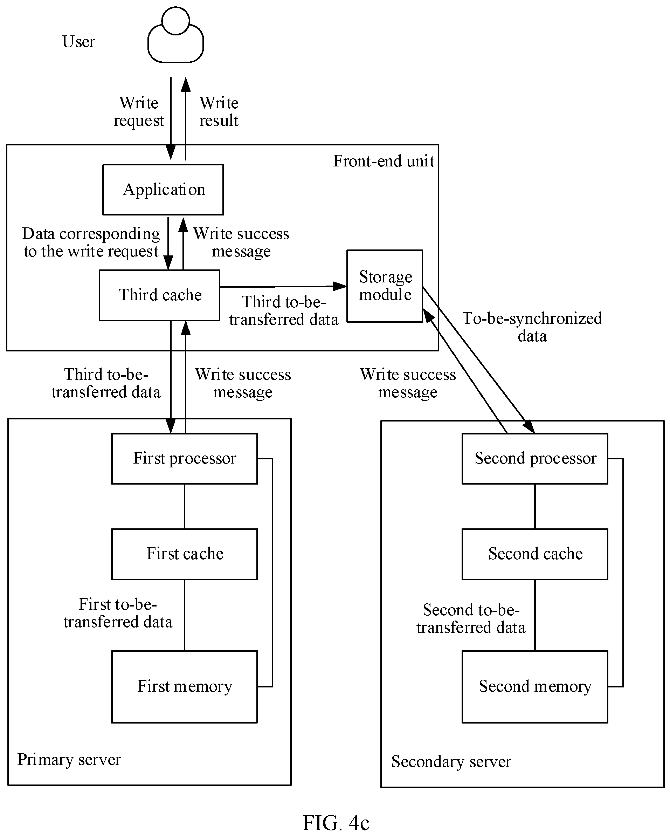

In some embodiments, the primary server may include a first processor, a first cache, and a first memory, and the secondary server includes a second processor, a second cache, and a second memory, as shown in FIG. 4c.

The first processor is configured to: after receiving the third to-be-transferred data and successfully storing the third to-be-transferred data in the first cache, send a write success message to the third cache; and when a first preset transfer rule is met, obtain first to-be-transferred data from the third to-be-transferred data stored in the first cache, and send the first to-be-transferred data to the first memory for storage.

The second processor is configured to: after receiving the to-be-synchronized data sent by the storage module and successfully storing the to-be-synchronized data in the second cache, send a write success message to the storage module; and when a second preset transfer rule is met, obtain second to-be-transferred data from the to-be-synchronized data stored in the second cache, and send the second to-be-transferred data to the second memory for storage.

The first preset transfer rule herein may be that preset duration is met or that the data in the first cache meets a preset amount. The second preset transfer rule may be that preset duration is met or that the data in the second cache meets a preset amount.

For example, the third cache of the front-end unit sends the third to-be-transferred data (data a, data b, and data c) to the first processor. After successfully storing the data a, the data b, and the data c in the first cache, the first processor sends a write success message to the third cache. It is assumed that the first transfer rule is an interval of 20s. Every 20s, the first processor obtains, from the first cache, first to-be-transferred data that has not been transferred to the first memory before, and sends the first to-be-transferred data to the first memory for permanent storage.

For another example, when the preset synchronization rule is met, the storage module of the front-end unit sends the to-be-synchronized data (for example, data a, data b, data c, data d, data e, and data f) to the second processor. After successfully storing the to-be-synchronized data in the second cache, the second processor sends a write success message to the storage module. It is assumed that the second transfer rule is an interval of 20s. Every 20s, the second processor obtains, from the second cache, second to-be-transferred data that has not been transferred to the second memory before, and sends the second to-be-transferred data to the second memory for permanent storage.

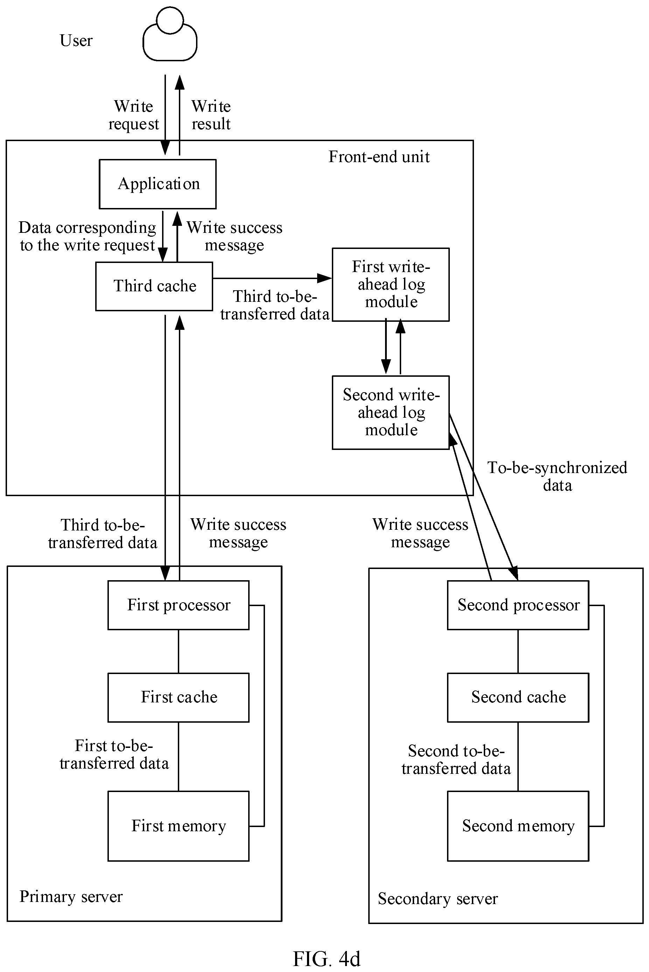

In some embodiments, the storage module may be two write-ahead log (Write-Ahead Log, WAL) modules: a first write-ahead log module and a second write-ahead log module, as shown in FIG. 4d. The first write-ahead log module is configured to record the third to-be-transferred data that is successfully written into the primary server, and the second write-ahead log module is configured to perform a remote replication operation.

Specifically, after receiving a write success message of the primary server for a piece of third to-be-transferred data, the third cache sends the third to-be-transferred data to the first write-ahead log module, so that the first write-ahead log module records the third to-be-transferred data. When the preset synchronization rule is met, the to-be-synchronized data is stored in the second write-ahead log module, so that the second write-ahead log module sends the to-be-synchronized data to the secondary server. After the second write-ahead log module receives the write success message sent by the secondary server, it indicates that one time of remote replication is completed. In this case, the second write-ahead log module clears the data stored in the second write-ahead log module, and the cleared second write-ahead log module is updated to a first write-ahead log module, to record data that is successfully written into the primary server. The original first write-ahead log module is updated to a second write-ahead log module, so that data in the second write-ahead log module is sent to the secondary server as to-be-synchronized data.

In the foregoing technical solutions, two write-ahead log modules are disposed, and the two write-ahead log modules are configured to complete different work. After one time of remote replication is completed, roles of the two write-ahead log modules are exchanged. It can be ensured that a process in which the first write-ahead log module records the data that is successfully written into the primary server and the remote replication process are performed simultaneously without affecting each other. This ensures replication efficiency and orderly running of the remote replication system.

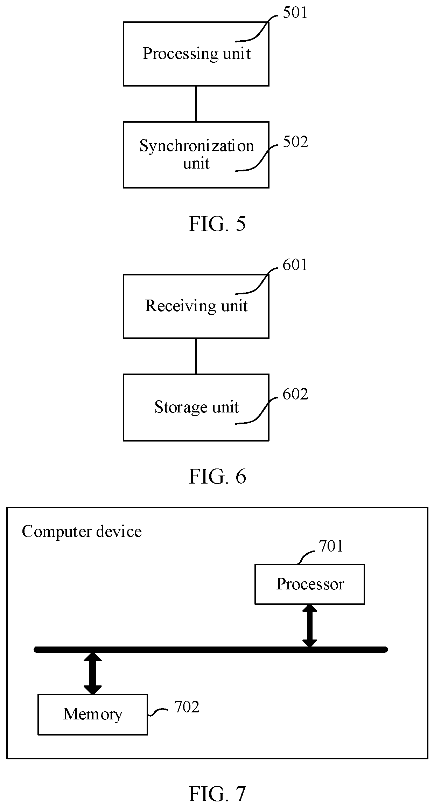

Based on a same technical concept as the foregoing technical content, an embodiment of this application provides a remote replication apparatus. As shown in FIG. 5, the remote replication apparatus includes a processing unit 501 and a synchronization unit 502. The remote replication apparatus is configured to perform the method embodiments shown in FIG. 3a to FIG. 3d. Specifically, the processing unit 501 is configured to: receive a write request, and return a write result after determining that data corresponding to the write request is successfully written into a primary server; and record data that is successfully written into the primary server each time. The synchronization unit 502 is configured to: when a preset synchronization rule is met, determine to-be-synchronized data from the recorded data, and send the to-be-synchronized data to a secondary server.

In a possible implementation, the synchronization unit 502 is further configured to: after sending the to-be-synchronized data to the secondary server, receive a write success message sent by the secondary server; and delete the to-be-synchronized data from recorded data.

Based on a same technical concept as the foregoing technical content, an embodiment of this application provides a remote replication apparatus. As shown in FIG. 6, the remote replication apparatus includes a receiving unit 601 and a storage unit 602. The remote replication apparatus is configured to perform the method embodiments shown in FIG. 3a to FIG. 3d. Specifically, the receiving unit 601 is configured to receive data written by a processing unit of a front-end unit; and the storage unit 602 is configured to store the received data.

Based on a same technical concept as the foregoing technical content, an embodiment of this application provides a remote replication apparatus. As shown in FIG. 5, the remote replication apparatus includes a processing unit 501 and a synchronization unit 502. The remote replication apparatus is configured to perform the method embodiments shown in FIG. 4a to FIG. 4d. Specifically, the processing unit 501 is configured to receive a write request, and return a write result after determining that data corresponding to the write request is successfully stored; when a third preset transfer rule is met, determine third to-be-transferred data from the data stored in the processing unit 501, and send the third to-be-transferred data to a primary server; and record third to-be-transferred data that is successfully transferred to the primary server each time. The synchronization unit 502 is configured to: when a preset synchronization rule is met, determine to-be-synchronized data from the recorded data, and send the to-be-synchronized data to a secondary server.

In a possible implementation, after sending the to-be-synchronized data to the secondary server, the synchronization unit 502 is further configured to: receive a write success message sent by the secondary server; and delete the to-be-synchronized data from the recorded data.

Based on a same technical concept as the foregoing technical content, an embodiment of this application provides a remote replication apparatus. As shown in FIG. 6, the remote replication apparatus includes a receiving unit 601 and a storage unit 602. The remote replication apparatus is configured to perform the method embodiments shown in FIG. 4a to FIG. 4d. Specifically, the receiving unit 601 is configured to receive third to-be-transferred data written by a processing unit of a front-end unit; and the storage unit 602 is configured to store the received third to-be-transferred data.

Based on a same technical concept, an embodiment of this application provides a computer device. As shown in FIG. 7, the computer device includes at least one processor 701 and a memory 702 connected to the at least one processor. A specific connection medium between the processor 701 and the memory 702 is not limited in this embodiment of this application. In FIG. 7, an example in which the processor 701 and the memory 702 are connected through a bus is used. The bus may be classified into an address bus, a data bus, a control bus, and the like.

In this embodiment of this application, the memory 702 stores instructions that can be executed by the at least one processor 701. The at least one processor 701 may perform, by executing the instructions stored in the memory 702, the steps of the remote replication methods shown in FIG. 3a to FIG. 3d and FIG. 4a to FIG. 4d.

The processor 701 is a control center of the computer device, and may be connected to various parts of the computer device through various interfaces and lines, and perform remote replication by running or executing the instructions stored in the memory 702 and invoking data stored in the memory 702. In some embodiments, the processor 701 may include one or more processing units. The processor 701 may integrate an application processor and a modem processor. The application processor mainly processes an operating system, a user interface, an application program, and the like. The modem processor mainly processes wireless communication. It may be understood that the foregoing modem processor may alternatively not be integrated into the processor 701. In some embodiments, the processor 701 and the memory 702 may be implemented on a same chip. In some embodiments, the processor 701 and the memory 702 may alternatively be separately implemented on independent chips.

The processor 701 may be a general-purpose processor, for example, a central processing unit (CPU), a digital signal processor, an application-specific integrated circuit (Application-Specific Integrated Circuit, ASIC), a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by a combination of hardware in the processor and a software module.

As a non-volatile computer-readable storage medium, the memory 702 may be configured to store a non-volatile software program, a non-volatile computer-executable program, and a module. The memory 702 may include at least one type of storage medium, for example, may include a flash memory, a hard disk, a multimedia card, a card-type memory, a random access memory (Random Access Memory, RAM), a static random access memory (Static Random Access Memory, SRAM), a programmable read-only memory (Programmable Read-Only Memory, PROM), a read-only memory (Read-Only Memory, ROM), an electrically erasable programmable read-only memory (Electrically Erasable Programmable Read-Only Memory, EEPROM), a magnetic memory, a magnetic disk, an optical disc, or the like. The memory 702 is any other medium that can carry or store expected program code in a form of instructions or a data structure and that can be accessed by a computer, but is not limited thereto. The memory 702 in this embodiment of this application may alternatively be a circuit or any other apparatus that can implement a storage function, and is configured to store program instructions and/or data.

Based on a same technical concept as the foregoing technical content, an embodiment of this application further provides a computer-readable storage medium. The computer-readable storage medium stores a computer program or instructions. When the computer program or the instructions are executed, a computer is enabled to perform the method embodiments shown in FIG. 3a to FIG. 3d and FIG. 4a to FIG. 4d.

Based on a same technical concept as the foregoing technical content, an embodiment of this application provides a computer program product. When a computer reads and executes the computer program product, the computer is enabled to perform the method embodiments shown in FIG. 3a to FIG. 3d and FIG. 4a to FIG. 4d.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

It is clear that a person skilled in the art can make various modifications and variations to this application without departing from the protection scope of this application. Therefore, this application is intended to cover these modifications and variations of this application provided that they fall within the scope of the claims of this application and equivalent technologies thereof.

## Claims

1. A remote replication system, comprising a primary server, a secondary server, and a front-end unit, wherein
the front-end unit is configured to: receive a write request, and return a write result after determining that data corresponding to the write request is successfully written into the primary server; record data that is successfully written into the primary server each time; and when a preset synchronization rule is met, determine to-be-synchronized data from the recorded data, and send the to-be-synchronized data to the secondary server;
the primary server is configured to store the data written by the front-end unit; and
the secondary server is configured to store the to-be-synchronized data sent by the front-end unit.

2. The system according to claim 1, wherein the front-end unit comprises an application and a storage module, wherein
the application is configured to: receive the write request, send the data corresponding to the write request to the primary server, return the write result after receiving a write success message sent by the primary server, and send the data corresponding to the write request to the storage module; and
the storage module is configured to: receive and record the data that is successfully written into the primary server each time; and when the preset synchronization rule is met, determine the to-be-synchronized data from the recorded data, and send the to-be-synchronized data to the secondary server.

3. The system according to claim 2, wherein the primary server comprises a first processor, a first cache, and a first memory, and the secondary server comprises a second processor, a second cache, and a second memory, wherein
the first processor is configured to: after receiving the data that corresponds to the write request and that is sent by the application and successfully storing the data corresponding to the write request in the first cache, send a write success message to the application; and when a first preset transfer rule is met, obtain first to-be-transferred data from the data stored in the first cache, and send the first to-be-transferred data to the first memory for storage; and
the second processor is configured to: after receiving the to-be-synchronized data sent by the storage module and successfully storing the to-be-synchronized data in the second cache, send a write success message to the storage module; and when a second preset transfer rule is met, obtain second to-be-transferred data from the data stored in the second cache, and send the second to-be-transferred data to the second memory for storage.

4. The system according to claim 2 or 3, wherein the storage module is specifically configured to:
after sending the to-be-synchronized data to the secondary server, receive a write success message sent by the secondary server; and
delete the to-be-synchronized data from the recorded data.

5. A remote replication system, comprising a primary server, a secondary server, and a front-end unit, wherein
the front-end unit is configured to: receive a write request, and return a write result after determining that data corresponding to the write request is successfully stored; when a third preset transfer rule is met, determine third to-be-transferred data from the data stored in the front-end unit, and send the third to-be-transferred data to the primary server; record the third to-be-transferred data that is successfully transferred to the primary server each time; and when a preset synchronization rule is met, determine to-be-synchronized data from the recorded data, and send the to-be-synchronized data to the secondary server;
the primary server is configured to store the third to-be-transferred data written by the front-end unit; and
the secondary server is configured to store the to-be-synchronized data sent by the front-end unit.

6. The system according to claim 5, wherein the front-end unit comprises an application, a third cache, and a storage module, wherein
the application is configured to: receive the write request, send the data corresponding to the write request to the third cache, and return the write result after receiving a write success message sent by the third cache;
the third cache is configured to: after successfully storing the data sent by the application, return the write success message to the application; when the third preset transfer rule is met, determine the third to-be-transferred data from the data stored in the third cache, and send the third to-be-transferred data to the primary server; and after receiving a write success message sent by the primary server, send the third to-be-transferred data to the storage module; and
the storage module is configured to: receive and record the data that is successfully transferred by the third cache to the primary server each time; and when the preset synchronization rule is met, determine the to-be-synchronized data from the recorded data, and send the to-be-synchronized data to the secondary server.

7. The system according to claim 6, wherein the primary server comprises a first processor, a first cache, and a first memory, and the secondary server comprises a second processor, a second cache, and a second memory, wherein
the first processor is configured to: after receiving the third to-be-transferred data and successfully storing the third to-be-transferred data in the first cache, send a write success message to the third cache; and when a first preset transfer rule is met, obtain first to-be-transferred data from the third to-be-transferred data stored in the first cache, and send the first to-be-transferred data to the first memory for storage; and
the second processor is configured to: after receiving the to-be-synchronized data sent by the storage module and successfully storing the to-be-synchronized data in the second cache, send a write success message to the storage module; and when a second preset transfer rule is met, obtain second to-be-transferred data from the to-be-synchronized data stored in the second cache, and send the second to-be-transferred data to the second memory for storage.

8. The system according to claim 6 or 7, wherein the storage module is specifically configured to:
after sending the to-be-synchronized data to the secondary server, receive a write success message sent by the secondary server; and
delete the to-be-synchronized data from the recorded data.

9. The system according to any one of claim 3 and claims 6 and 7, wherein the cache is specifically configured to:
after determining that a preset transfer rule is met, transfer stored data that has not been transferred.

10. A remote replication method, wherein the method is applied to a remote replication system comprising a front-end unit, a primary server, and a secondary server, and comprises:
receiving, by the front-end unit, a write request, and returning a write result after determining that data corresponding to the write request is successfully written into the primary server; and
recording, by the front-end unit, data that is successfully written into the primary server each time; and when a preset synchronization rule is met, determining to-be-synchronized data from the recorded data, and sending the to-be-synchronized data to the secondary server.

11. The method according to claim 10, wherein after sending the to-be-synchronized data to the secondary server, the method further comprises:
receiving, by the front-end unit, a write success message sent by the secondary server; and
deleting, by the front-end unit, the to-be-synchronized data from the recorded data.

12. A remote replication method, wherein the method is applied to a remote replication system comprising a front-end unit, a primary server, and a secondary server, and comprises:
receiving, by the primary server, data written by the front-end unit; and
storing, by the primary server, the received data.

13. The method according to claim 12, wherein the primary server comprises a first processor, a first cache, and a first memory, wherein storing, by the primary server, the received data comprises:
after storing the received data in the first cache, sending, by the first processor, a write success message to the front-end unit; and
when a first preset transfer rule is met, obtaining, by the first processor, first to-be-transferred data from the data stored in the first cache, and sending the first to-be-transferred data to the first memory for storage.

14. A remote replication method, wherein the method is applied to a remote replication system comprising a front-end unit, a primary server, and a secondary server, and comprises:
receiving, by the front-end unit, a write request, and returning a write result after determining that data corresponding to the write request is successfully stored;
when a third preset transfer rule is met, determining, by the front-end unit, third to-be-transferred data from the data stored in the front-end unit, and sending the third to-be-transferred data to the primary server; and recording the third to-be-transferred data that is successfully transferred to the primary server each time; and
when a preset synchronization rule is met, determining, by the front-end unit, to-be-synchronized data from the recorded data, and sending the to-be-synchronized data to the secondary server.

15. The method according to claim 14, wherein after sending, by the front-end unit, the to-be-synchronized data to the secondary server, the method further comprises:
receiving, by the front-end unit, a write success message sent by the secondary server; and
deleting, by the front-end unit, the to-be-synchronized data from the recorded data.

16. A remote replication method, wherein the method is applied to a remote replication system comprising a front-end unit, a primary server, and a secondary server, and comprises:
receiving, by the primary server, third to-be-transferred data written by the front-end unit; and
storing, by the primary server, the received third to-be-transferred data.

17. The method according to claim 16, wherein the primary server comprises a first processor, a first cache, and a first memory, wherein storing, by the primary server, the received third to-be-transferred data comprises:
after successfully storing the third to-be-transferred data in the first cache, sending, by the first processor, a write success message to the front-end unit; and when a first preset transfer rule is met, obtaining first to-be-transferred data from the third to-be-transferred data stored in the first cache, and sending the first to-be-transferred data to the first memory for storage.

18. A remote replication apparatus, wherein the apparatus is used in a front-end unit and comprises:
a processing unit, configured to:
receive a write request, and return a write result after determining that data corresponding to the write request is successfully written into a primary server; and
record data that is successfully written into the primary server each time; and
a synchronization unit, configured to: when a preset synchronization rule is met, determine to-be-synchronized data from the recorded data, and send the to-be-synchronized data to a secondary server.

19. A remote replication apparatus, wherein the apparatus is used in a primary server and comprises:
a receiving unit, configured to receive data written by a processing unit of a front-end unit; and
a storage unit, configured to store the received data.

20. A remote replication apparatus, wherein the apparatus is used in a front-end unit and comprises:
a processing unit, configured to:
receive a write request, and return a write result after determining that data corresponding to the write request is successfully stored; and
when a third preset transfer rule is met, determine third to-be-transferred data from the data stored in the processing unit, and send the third to-be-transferred data to a primary server; and record the third to-be-transferred data that is successfully transferred to the primary server each time; and
a synchronization unit, configured to: when a preset synchronization rule is met, determine to-be-synchronized data from the recorded data, and send the to-be-synchronized data to a secondary server.

21. A remote replication apparatus, wherein the apparatus is used in a primary server and comprises:
a receiving unit, configured to receive third to-be-transferred data written by a processing unit of a front-end unit; and
a storage unit, configured to store the received third to-be-transferred data.

22. A computing device, comprising:
a memory, configured to store a computer program; and
a processor, configured to invoke the computer program stored in the memory, to perform the method according to any one of claims 10 to 17.

23. A computer-readable storage medium, wherein the computer-readable storage medium stores a computer program or instructions, and when the computer program or the instructions are executed by a data transfer apparatus, the method according to any one of claims 10 to 17 is implemented.
